# EUROPÄISCHE PATENTSCHRIFT

(11) **EP 3 879 175 B1**
(45) Veröffentlichungstag und Bekanntmachung des Hinweises auf die Patenterteilung: **17.12.2025**
(21) Anmeldenummer: 21155976.0
(22) Anmeldetag: 09.02.2021
(51) Int. Cl.: F23D 3/40

(54) **BRENNKAMMERBAUGRUPPE FÜR EIN BRENNSTOFFBETRIEBENES FAHRZEUGHEIZGERÄT**
COMBUSTION CHAMBER MODULE FOR A FUEL-POWERED VEHICLE HEATING DEVICE
COMPOSANT DE CHAMBRE DE COMBUSTION POUR UN APPAREIL DE CHAUFFAGE À COMBUSTIBLE POUR VÉHICULE

(30) Priorität: 13.03.2020 DE 102020106881
(43) Veröffentlichungstag der Anmeldung: 15.09.2021
(73) Patentinhaber: Eberspächer Climate Control Systems GmbH, 73730 Esslingen (DE)
(72) Erfinder: Schlör, Christof, 73669 Lichtenwald (DE)
(74) Vertreter: Ruttensperger Lachnit Trossin Gomoll

(56) Entgegenhaltungen:
- DE-A1- 10 144 407
- DE-A1- 102012 101 576
- US-A1- 2017 153 026

## Beschreibung

Die vorliegende Erfindung betrifft eine Brennkammerbaugruppe für ein brennstoffbetriebenes Fahrzeugheizgerät.

Aus der EP 3 128 233 A1 ist eine Brennkammerbaugruppe für ein brennstoffbetriebenes Fahrzeugheizgerät bekannt, bei welcher stromaufwärts bezüglich einer Drallstrom-Erzeugungsanordnung ein poröses Verdampfermedium angeordnet ist. In das poröse Verdampfermedium wird flüssiger Brennstoff eingeleitet. An der der Drallstrom-Erzeugungsanordnung zugewandten Oberfläche des porösen Verdampfermediums wird der Brennstoff abgegeben. Die von radial außen in die Drallstrom-Erzeugungsanordnung eintretende Luft vermischt sich im Bereich der Drallstrom-Erzeugungsanordnung mit dem darin auch vorhandenen Brennstoffdampf und verlässt den im Wesentlichen im Bereich der Drallstrom-Erzeugungsanordnung gebildeten Mischbereich in Richtung zu einer stromabwärts auf die Drallstrom-Erzeugungsanordnung folgenden Diffusoranordnung.

Aus der DE 10 2012 101 576 A1 ist eine Brennkammerbaugruppe bekannt, bei welcher eine Mischkammer, deren Umfangswandung an einer Innenseite mit Verdampfermedium überdeckt ist, in Strömungsrichtung sich radial erweiternd ausgebildet ist. Stromaufwärts der Mischkammer ist eine Drallstrom-Erzeugungsanordnung angeordnet, und an ein stromabwärtiges Ende der Mischkammer schließt eine Brennkammer mit konstantem Querschnitt an.

Es ist die Aufgabe der vorliegenden Erfindung, eine Brennkammerbaugruppe für ein brennstoffbetriebenes Fahrzeugheizgerät vorzusehen, mit welcher im Verbrennungsbetrieb ein geminderter Stickoxidausstoß erreicht werden kann.

Erfindungsgemäß wird diese Aufgabe gelöst durch eine Brennkammerbaugruppe für ein brennstoffbetriebenes Fahrzeugheizgerät gemäß Anspruch 1. Diese Brennkammerbaugruppe umfasst:
- eine in Richtung einer Brennkammerbaugruppen-Längsachse sich erstreckende Mischkammer zur Erzeugung eines Luft/Brennstoff-Gemisches,
- eine Brennstoff-Zuführanordnung zum Zuführen von Brennstoff zu der Mischkammer,
- eine Verbrennungsluft-Zuführanordnung zum Zuführen von Verbrennungsluft zu der Mischkammer,
- eine in Richtung der Brennkammerbaugruppen-Längsachse stromabwärts bezüglich der Mischkammer angeordnete Diffusoranordnung.

Die Brennstoff-Zuführanordnung umfasst eine Verdampferanordnung, und die Verbrennungsluft-Zuführanordnung umfasst eine Drallstrom-Erzeugungsanordnung. Die Drallstrom-Erzeugungsanordnung ist in Richtung der Brennkammerbaugruppen-Längsachse stromaufwärts bezüglich der Mischkammer mit der Verdampferanordnung angeordnet.

Durch die erfindungsgemäße Abfolge der Baugruppen Drallstrom-Erzeugungsanordnung, Mischkammer mit ihrer Verdampferanordnung und Diffusoranordnung wird eine verbesserte Rezirkulation von Verbrennungsabgas aus die Diffusoranordnung in den Bereich der Mischkammer und somit in den Verbrennungsprozess erreicht, wodurch der Stickoxidanteil in dem aus der Diffusoranordnung beispielsweise in Richtung zu einem Flammrohr strömenden Verbrennungsabgas gemindert wird.

Um für die Mischkammer ein großes Volumen bereitzustellen, in welches auch zumindest ein Teil des rezirkulierten Abgases zurückgeführt werden kann, ist die Mischkammer von einer in Richtung der Brennkammerbaugruppen-Längsachse sich erstreckenden und diese umgebenden Mischkammer-Umfangswandung umgeben, und die Verdampferanordnung umfasst die Mischkammer-Umfangswandung an einer der Mischkammer zugewandten Innenseite wenigstens bereichsweise überdeckendes, poröses Verdampfermedium.

Dabei kann für eine gleichmäßige Brennstoffeinleitung in die Mischkammer das poröse Verdampfermedium die Mischkammer-Umfangswandung im Wesentlichen über ihren gesamten Umfang überdecken oder/und das poröse Verdampfermedium ringartig oder rohrartig ausgebildet sein. Somit kann im Wesentlichen die gesamte die Mischkammer umgebende Innenoberfläche durch das poröse Verdampfermedium bereitgestellt sein.

Um bei der erforderlichen Ausweitung des Strömungsquerschnitts einen Anschluss der Diffusoranordnung an die Mischkammer zu ermöglichen, wird vorgeschlagen, dass die Diffusoranordnung eine Diffusor-Umfangswandung umfasst, wobei die Diffusor-Umfangswandung einen auf die Mischkammer folgenden ersten Umfangswandung-Längenbereich mit geringerer Innenabmessung, vorzugsweise Innendurchmesser oder Innenquerschnittsfläche, aufweist und einen in Richtung der Brennkammerbaugruppen-Längsachse stromabwärts auf den ersten Umfangswandung-Längenbereich folgenden zweiten Umfangswandung-Längenbereich mit wenigstens bereichsweise größerer, entlang der Brennkammerbaugruppen-Längsachse in Richtung von dem ersten Umfangswandung-Längenbereich weg zunehmender Innenabmessung, vorzugsweise Innendurchmesser oder Innenquerschnittsfläche, aufweist.

Dabei kann die Diffusor-Umfangswandung im ersten Umfangswandung-Längenbereich mit entlang der Brennkammerbaugruppen-Längsachse im Wesentlichen konstanter Innenabmessung ausgebildet sein.

Um einen stufenfreien bzw. knickfreien Übergang beispielsweise zu einem Flammrohr oder dergleichen zu erreichen, kann im zweiten Umfangswandung-Längenbereich die Innenabmessung der Diffusor-Umfangswandung in Richtung vom ersten Umfangswandung-Längenbereich weg degressiv zunehmen. Hierzu kann weiter zwischen dem ersten Umfangswandung-Längenbereich und dem zweiten Umfangswandung-Längenbereich ein Umfangswandung-Übergangsbereich mit wenigstens bereichsweise progressiver Zunahme der Innenabmessung, vorzugsweise Innendurchmesser oder Innenquerschnittsfläche, der Diffusor-Umfangswandung vorgesehen sein.

Weiter kann die Diffusor-Umfangswandung einen in Richtung der Brennkammerbaugruppen-Längsachse stromabwärts auf den zweiten Umfangswandung-Längenbereich folgenden dritten Umfangswandung-Längenbereich mit entlang der Brennkammerbaugruppen-Längsachse im Wesentlichen konstanter Innenabmessung, vorzugsweise Innendurchmesser oder Innenquerschnittsfläche, aufweisen. Dieser dritte Umfangswandung-Längenbereich kann in ein Flammrohr übergehen oder dieses oder einen Teil davon bereitstellen Für die Stabilisierung der Verbrennung wird vorgeschlagen, dass die Diffusoranordnung eine an der Diffusor-Umfangswandung getragene Flammblende aufweist.

Für eine baulich einfache Ausgestaltung kann die Diffusor-Umfangswandung mit dem ersten Umfangswandung-Längenbereich an einem stromabwärtigen Endbereich der Mischkammer-Umfangswandung festgelegt sein.

Die Drallstrom-Erzeugungsanordnung kann eine Mehrzahl von in Umfangsrichtung um die Brennkammerbaugruppen-Längsachse aufeinanderfolgend angeordneten Strömungsablenkungselementen umfassen. Diese Strömungsablenkelemente können die beispielsweise in Richtung der Brennkammerbaugruppen-Längsachse auf diese zu strömende Verbrennungsluft effizient in Umfangsrichtung umlenken.

Zur Anbindung an die Mischkammer kann die Verbrennungsluft-Zuführanordnung ein die Strömungsablenkelemente tragendes Drallstromgehäuse umfassen, wobei vorzugsweise vorgesehen sein kann, dass das Drallstromgehäuse an einem stromaufwärtigen Endbereich der Mischkammer-Umfangswandung festgelegt ist.

Die vorliegende Erfindung betrifft ferner ein brennstoffbetriebenes Fahrzeugheizgerät, umfassend eine Brennkammerbaugruppe erfindungsgemäßem Aufbau.

Ein derartiges Fahrzeugheizgerät kann weiter ein Verbrennungsluftgebläse zum Zuführen von Verbrennungsluft zu der Mischkammer über die Drallstrom-Erzeugungsanordnung sowie eine Brennstoffpumpe zum Zuführen von Brennstoff zu der Mischkammer umfassen.

Die vorliegende Erfindung wird nachfolgend mit Bezug auf die beiliegenden Figuren detailliert beschrieben. Es zeigt:
- Fig. 1: eine perspektivische Ansicht einer Brennkammerbaugruppe für ein brennstoffbetriebenes Fahrzeugheizgerät;
- Fig. 2: in prinzipartiger Darstellung ein brennstoffbetriebenes Fahrzeugheizgerät mit der in Seitenansicht dargestellten Brennkammerbaugruppe der Fig. 1;
- Fig. 3: eine Längsschnittansicht der Brennkammerbaugruppe der Fig. 1 und 2, geschnitten längs einer Linie III-III in Fig. 2;
- Fig. 4: eine der Fig. 1 entsprechende perspektivische Ansicht einer Brennkammerbaugruppe für ein brennstoffbetriebenes Fahrzeugheizgerät;
- Fig. 5: eine Seitenansicht der Brennkammerbaugruppe der Fig. 4;
- Fig. 6: eine Längsschnittansicht der Brennkammerbaugruppe der Fig. 4 und 5, geschnitten längs einer Linie VI-VI in Fig. 5.

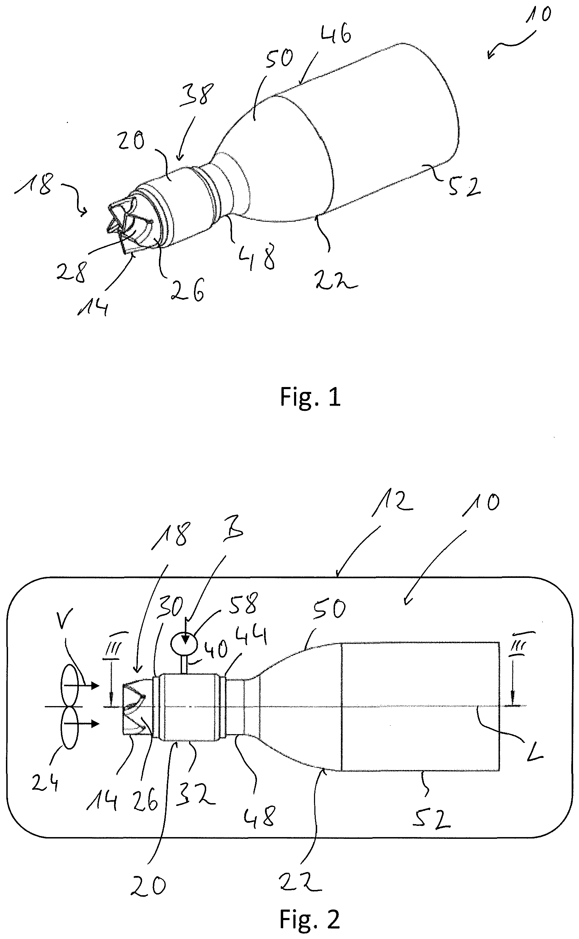

Die Fig. 1 bis 3 zeigen eine erste Ausgestaltungsart einer allgemein mit 10 bezeichneten Brennkammerbaugruppe für ein in Fig. 2 in prinzipartiger Darstellung gezeigtes brennstoffbetriebenes Fahrzeugheizgerät 12. Die Brennkammerbaugruppe 10 umfasst in Richtung einer Brennkammerbaugruppen-Längsachse L aufeinanderfolgend eine eine Drallstrom-Erzeugungsanordnung 14 umfassende Verbrennungsluft-Zuführanordnung 18, eine stromabwärts darauf folgende Mischkammer 20 sowie eine stromabwärts auf die Mischkammer 20 folgende Diffusoranordnung 22.

Ein beispielsweise als Seitenkanalgebläse ausgebildetes Verbrennungsluftgebläse 24 fördert die für die Verbrennung erforderliche Verbrennungsluft V beispielsweise näherungsweise in Richtung der Brennkammerbaugruppen-Längsachse L auf die Drallstrom-Erzeugungsanordnung 14 der Verbrennungsluft-Zuführanordnung 18 zu. Dadurch wird der zunächst näherungsweise in Richtung der Brennkammerbaugruppen-Längsachse L ausgerichtete Strom der Verbrennungsluft V in Umfangsrichtung abgelenkt, so dass eine die Brennkammerbaugruppen-Längsachse L umgebende Drallströmung der Verbrennungsluft V in der auf die Drallstrom-Erzeugungsanordnung 14 folgenden Mischkammer 20 bzw. auch der an die Mischkammer 20 anschließenden Diffusoranordnung 22 erzeugt wird.

Die Drallstrom-Erzeugungsanordnung 14 umfasst in dem in den Fig. 1 bis 3 dargestellten Ausgestaltungsbeispiel ein näherungsweise rohrartig bzw. zylindrisch ausgebildetes Drallstromgehäuse 26. An dessen stromaufwärtigen Ende sind in Umfangsrichtung aufeinanderfolgend mehrere schaufelartige Störmungsablenkelemente 28 abgebogen, welche von radial außen nach radial innen sich erstreckend in Umfangsrichtung jeweils eine konkave Struktur aufweisen können, um eine effiziente Umlenkung des Stroms der Verbrennungsluft V in Umfangsrichtung zu erreichen.

In seinem stromabwärtigen Ende ist das Drallstromgehäuse 26 in einen stromaufwärtigen Endbereich 30 einer grundsätzlich im Wesentlichen zylindrisch geformten Mischkammer-Umfangswandung 32 eingesetzt und damit materialschlüsssig, beispielsweise durch Verschweißung, verbunden. Eine Innenseite der Mischkammer-Umfangswandung 32 ist näherungsweise über deren gesamte axiale Erstreckung und vorzugsweise über den gesamten Umfang mit einem rohrartig bzw. ringartig ausgebildeten porösen Verdampfermedium 34 einer allgemein mit 36 bezeichneten Verdampferanordnung einer Brennstoff-Zuführanordnung 38 überdeckt. Über eine die Mischkammer-Umfangswandung durchsetzende bzw. in diese einmündende Brennstoffleitung 40 wird flüssiger Brennstoff B in das poröse Verdampfermedium 34 eingeleitet. Durch Kapillarförderwirkung, gegebenenfalls auch unterstützt durch Schwerkraft verteilt der flüssige Brennstoff B sich im Innenvolumen des porösen Verdampfermediums 34, welches beispielsweise aus Metallgeflecht, Metallschaum, Schaumkeramik oder dergleichen aufgebaut sein kann. An der nach radial innen freiliegenden Oberfläche gibt das poröse Verdampfermedium 34 den Brennstoff B in Dampfform in die von der Mischkammer-Umfangswandung umgrenzte Mischkammer 20 ab, so dass dieser Brennstoffdampf sich mit dem von stromaufwärts über die Drallstrom-Erzeugungsanordnung 14 in die Mischkammer 20 eingeleiteten Strom der Verbrennungsluft V vermischen kann. Diese Vermischung wird aufgrund des Umstandes, dass der Verbrennungsluftstrom als Drallströmung in die Mischkammer 20 gelangt, unterstützt.

Die an einen stromabwärtigen Endbereich 44 der Mischkammer-Umfangswandung 32 anschließende bzw. fest angebundene Diffusoranordnung 22 umfasst eine Diffusor-Umfangswandung 46 mit einem ersten Umfangswandung-Längenbereich 48. Dieser entlang der Brennkammerbaugruppen-Längsachse L mit im Wesentlichen konstanter Innenabmessung, also beispielsweise im Wesentlichen konstantem Innendurchmesser oder konstanter Innenquerschnittsfläche, also im Wesentlichen zylindrisch ausgebildete erste Umfangswandung-Längenbereich 48 ist in den stromabwärtigen Endbereich 44 der Mischkammer-Umfangswandung 32 eingesetzt und damit materialschlüssig, beispielsweise durch Verschweißung, fest verbunden.

Auf den ersten Umfangswandung-Längenbereich 48 der Diffusor-Umfangswandung 46 folgt ein zweiter Umfangswandung-Längenbereich 50 der Diffusor-Umfangswandung 46. In diesem zweiten Umfangswandung-Längenbereich 50 nimmt die Innenabmessung der Diffusor-Umfangswandung 46 zu. Man erkennt, dass in Richtung der Brennkammerbaugruppen-Längsachse L diese Zunahme der Innenabmessung, also beispielsweise des Innendurchmessers oder des Innenquerschnitts, degressiv ist, also die Zunahmerate in Richtung der Brennkammerbaugruppen-Längsachse L nach stromabwärts abnimmt bis im Übergang zu einem dritten Umfangswandung-Längenbereich 52 die Zunahmerate der Innenabmessung bei Null ist. Im dritten Umfangswandung-Längenbereich 52 weist die Diffusor-Umfangswandung 46 eine im Wesentlichen konstante Innenabmessung, beispielsweise Innendurchmesser oder Innenquerschnittsfläche auf, so dass auch in diesem Bereich eine im Wesentlichen zylindrische Struktur der Diffusor-Umfangswandung 46 vorliegt, wobei aufgrund der degressiven Zunahme der Innenabmessung der Diffusor-Umfangswandung 46 im zweiten Umfangswandung-Längenbereich der Übergang zum dritten Umfangswandung-Längenbereich 52 im Wesentlichen knickfrei bzw. stufenfrei erfolgen kann.

Im stromaufwärtigen Bereich des zweiten Umfangswandung-Längenbereichs 50 geht dieser in einem Umfangswandung-Übergangsbereich 54 in den ersten Umfangswandung-Längenbereich 48 über. Da im dargestellten Ausgestaltungsbeispiel der erste Umfangswandung-Längenbereich 48 eine näherungsweise konstante Innenabmessung aufweist, ist der Umfangswandung-Übergangsbereich 54 für einen knickfreien bzw. stufenfreien Anschluss an den ersten Umfangswandung-Längenbereich 48 ausgehend von diesem mit progressiver Zunahme der Innenabmessung, also beispielsweise des Innendurchmessers oder der Innenquerschnittsfläche, der Diffusor-Umfangswandung 46 ausgebildet.

Im dritten Umfangswandung-Längenbereich 52 ist eine Flammblende 56 vorgesehen, welche dazu dient, die Verbrennung bzw. die Flamme im stromaufwärts davon liegenden Bereich, also im Wesentlichen in der Mischkammer 20 und in der darauf folgenden Diffusoranordnung 22, zu stabilisieren.

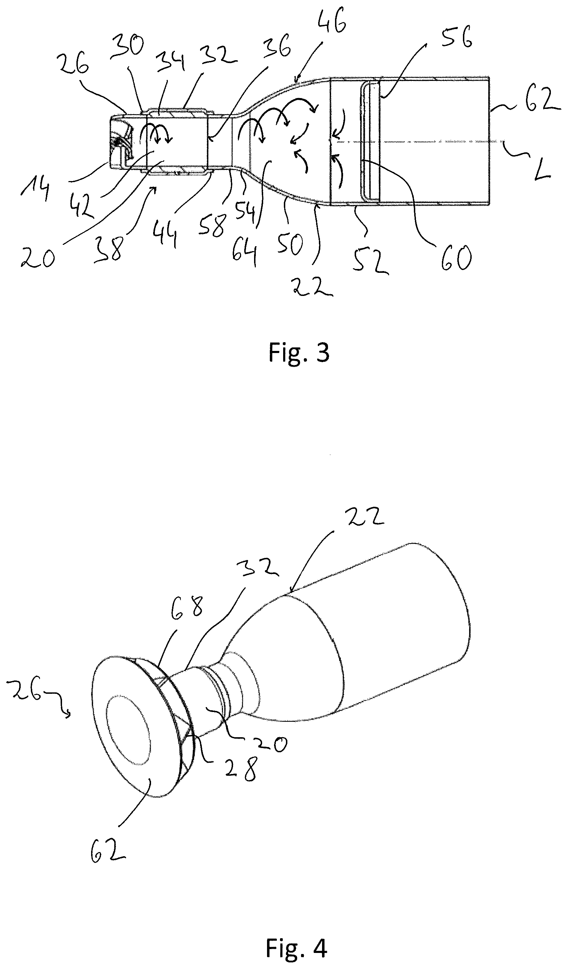

Im Verbrennungsbetrieb wird das in der Mischkammer 20 erzeugte Gemisch aus Verbrennungsluft V und durch eine Brennstoffpumpe 58, beispielsweise Dosierpumpe, zugeführtem Brennstoff B mit der in Fig. 3 angedeuteten Drallströmung in den Bereich der Diffusoranordnung 22 strömen. Durch ein nicht dargestelltes Zündorgan, beispielsweise einen Glühstift, wird in diesem Volumenbereich 42 die Verbrennung gestartet, so dass im Bereich der Mischkammer 20 und der Diffusoranordnung 46 aufgrund der dort ablaufenden Verbrennung Abgas entsteht. Das Verbrennungsabgas verlässt den stromaufwärts der Flammblende 56 liegenden Bereich über eine in der Flammblende 56 gebildete Öffnung 60 in Richtung zu einem dann folgenden, im Wesentlichen vom dritten Umfangswandung-Längenbereich 52 der Diffusor-Umfangswandung 46 bereitgestellten Flammrohr 62. In einer nicht dargestellten Wärmetauscheranordnung kann im Verbrennungsabgas transportierte Wärme auf ein zu erwärmendes Medium übertragen werden.

Aufgrund der durch die Drallstrom-Erzeugungsanordnung 14 generierten Drallströmung wird ein Teil des in die Diffusoranordnung 22 eintretenden bzw. auch darin entstehenden Abgases nach radial innen umgelenkt und somit in Richtung stromaufwärts, also auch in Richtung zur Mischkammer 20, zurückgeleitet. Durch diese Rückspeisung von Verbrennungsabgas in den Verbrennungsprozess wird der Anteil des im Abgas enthaltenen Stickoxids deutlich gemindert. Da diese Rezirkulation von Verbrennungsabgas im Wesentlichen durch die Strömungsführung bzw. die Drallströmung entsteht, diese Rezirkulation im Wesentlichen also unabhängig davon ist, ob eine Flammblende 56 vorhanden ist bzw. wo diese positioniert ist, erfolgt eine verlustarme Aufteilung des Abgasstroms, so dass auch ein effizienter Verbrennungsbetrieb im Bereich der Mischkammer 20 bzw. der daran anschließenden Diffusoranordnung 22 ablaufen kann. Für diesen Verbrennungsbetrieb bilden im Wesentlichen das Volumen der Mischkammer 20 und das vom ersten Umfangswandung-Längenbereich 48, vom Umfangswandung-Übergangsbereich 54 und vom zweiten Umfangswandung-Längenbereich 50, zum Teil auch vom dritten Umfangswandung-Längenbereich 52 umgrenzte Volumen eine Brennkammer 64 der Brennkammerbaugruppe 10.

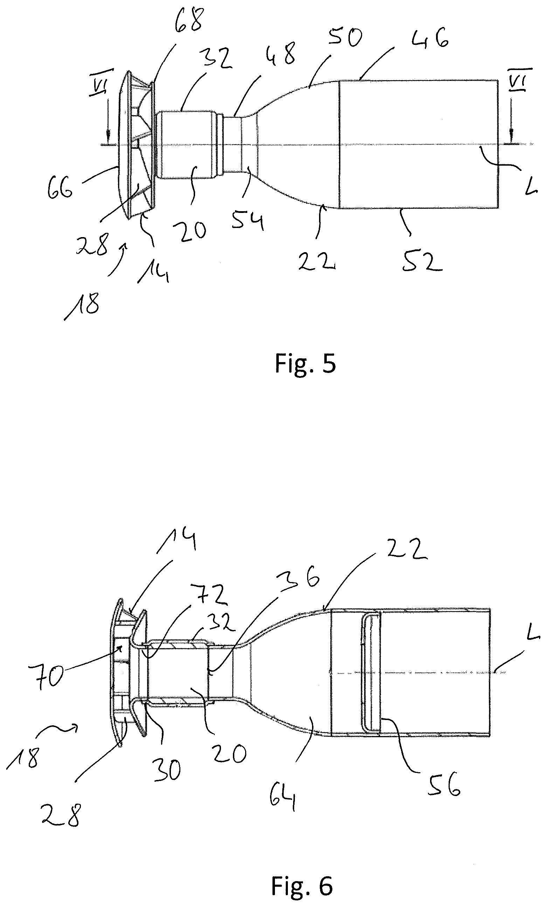

Bei der in den Fig. 4 bis 6 dargestellten Ausgestaltungsform entspricht der Aufbau der Brennkammer 20 bzw. der Diffusoranordnung 22 im Wesentlichen dem vorangehend beschriebenen Aufbau, so dass auf die diesbezüglichen Ausführungen zu den Fig. 1 bis 3 verwiesen wird.

Ein Unterschied besteht in der Ausgestaltung der Drallstrom-Erzeugungsanordnung 14 der Verbrennungsluft-Zuführanordnung 18. Das Drallstromgehäuse 26 der Verbrennungsluft-Zuführanordnung 18 umfasst zwei in Richtung der Brennkammerbaugruppen-Längsachse L aufeinanderfolgend angeordnete, tellerartige bzw. scheibenartige Gehäusebauteile 66, 68, welche zwischen sich die Mehrzahl von von radial außen nach radial innen sich erstreckenden Strömungsablenkelementen 28 aufnehmen. Somit sind in Umfangsrichtung aufeinanderfolgende von radial außen nach radial innen führende Strömungskanäle 70 gebildet, über welche die dann als Drallströmung in die Brennkammer 20 eingeleitete Verbrennungsluft von radial außen nach radial innen geleitet wird. Das Gehäuseteil 68 weist einen in den stromaufwärtigen Endbereich 30 der Mischkammer-Umfangswandung 32 eingesetzten und damit fest verbundenen Halsabschnitt 72 auf.

Auch bei dieser Ausgestaltung der Brennkammerbaugruppe 10 tritt die Verbrennungsluft V als Drallströmung in die Mischkammer 20 ein, wird dort mit dem abgedampften Brennstoff vermischt und verbrannt, so dass auch das bei der Verbrennung in der Brennkammer 64 entstehende Verbrennungsabgas aufgrund der vorhandenen Drallströmung teilweise in der Diffusoranordnung 22 nach radial innen und wieder zurück in Richtung zur Mischkammer 20 geleitet wird.

## Patentansprüche

1. Brennkammerbaugruppe für ein brennstoffbetriebenes Fahrzeugheizgerät, umfassend:
- eine in Richtung einer Brennkammerbaugruppen-Längsachse (L) sich erstreckende Mischkammer (20) zur Erzeugung eines Luft/BrennstoffGemisches, wobei die Mischkammer (20) von einer in Richtung der Brennkammerbaugruppen-Längsachse (L) sich erstreckenden und diese umgebenden Mischkammer-Umfangswandung (32) umgeben ist,
- eine Brennstoff-Zuführanordnung (38) zum Zuführen von Brennstoff (B) zu der Mischkammer (20), wobei die Brennstoff-Zuführanordnung (38) eine Verdampferanordnung (36) umfasst, wobei die Verdampferanordnung (36) die Mischkammer-Umfangswandung (32) an einer der Mischkammer (20) zugewandten Innenseite wenigstens bereichsweise überdeckendes, poröses Verdampfermedium (34) umfasst,
- eine Verbrennungsluft-Zuführanordnung (18) zum Zuführen von Verbrennungsluft (V) zu der Mischkammer (20), wobei die Verbrennungsluft-Zuführanordnung (18) eine Drallstrom-Erzeugungsanordnung (14) umfasst, wobei die Drallstrom-Erzeugungsanordnung (14) in Richtung der Brennkammerbaugruppen-Längsachse (L) stromaufwärts bezüglich der Mischkammer (20) mit der Verdampferanordnung (36) angeordnet ist,
wobei:
- die Mischkammer-Umfangswandung (32) zylindrisch geformt ist,
- die Innenseite der Mischkammer-Umfangswandung (32) über deren gesamte axiale Erstreckung mit dem porösen Verdampfermedium (34) überdeckt ist und
- in Richtung der Brennkammerbaugruppen-Längsachse (L) stromabwärts bezüglich der Mischkammer (20) eine Diffusoranordnung (22) angeordnet ist.

2. Brennkammerbaugruppe nach Anspruch 1, wobei das poröse Verdampfermedium (34) die Mischkammer-Umfangswandung (32) im Wesentlichen über ihren gesamten Umfang überdeckt.

3. Brennkammerbaugruppe nach einem der vorangehenden Ansprüche, wobei das poröse Verdampfermedium (34) ringartig oder rohrartig ausgebildet ist.

4. Brennkammerbaugruppe nach einem der vorangehenden Ansprüche, wobei die Diffusoranordnung (22) eine Diffusor-Umfangswandung (46) umfasst, wobei die Diffusor-Umfangswandung (46) einen auf die Mischkammer (20) folgenden ersten Umfangswandung-Längenbereich (48) mit geringerer Innenabmessung, vorzugsweise Innendurchmesser oder Innenquerschnittsfläche, aufweist und einen in Richtung der Brennkammerbaugruppen-Längsachse (L) stromabwärts auf den ersten Umfangswandung-Längenbereich (48) folgenden zweiten Umfangswandung-Längenbereich (50) mit wenigstens bereichsweise größerer, entlang der Brennkammerbaugruppen-Längsachse (L) in Richtung von dem ersten Umfangswandung-Längenbereich (48) weg zunehmender Innenabmessung, vorzugsweise Innendurchmesser oder Innenquerschnittsfläche, aufweist.

5. Brennkammerbaugruppe nach Anspruch 4, wobei die Diffusor-Umfangswandung (46) im ersten Umfangswandung-Längenbereich (48) mit entlang der Brennkammerbaugruppen-Längsachse (L) im Wesentlichen konstanter Innenabmessung ausgebildet ist.

6. Brennkammerbaugruppe nach Anspruch 4 oder 5, wobei im zweiten Umfangswandung-Längenbereich (50) die Innenabmessung der Diffusor-Umfangswandung (46) in Richtung vom ersten Umfangswandung-Längenbereich (48) weg degressiv zunimmt, oder/und wobei zwischen dem ersten Umfangswandung-Längenbereich (48) und dem zweiten Umfangswandung-Längenbereich (50) ein Umfangswandung-Übergangsbereich (54) mit wenigstens bereichsweise progressiver Zunahme der Innenabmessung, vorzugsweise Innendurchmesser oder Innenquerschnittsfläche, der Diffusor-Umfangswandung (46) vorgesehen ist.

7. Brennkammerbaugruppe nach einem der Ansprüche 4-6, wobei die Diffusor-Umfangswandung (46) einen in Richtung der Brennkammerbaugruppen-Längsachse (L) stromabwärts auf den zweiten Umfangswandung-Längenbereich (50) folgenden dritten Umfangswandung-Längenbereich (52) mit entlang der Brennkammerbaugruppen-Längsachse (L) im Wesentlichen konstanter Innenabmessung, vorzugsweise Innendurchmesser oder Innenquerschnittsfläche, aufweist.

8. Brennkammerbaugruppe nach einem der Ansprüche 4-7, wobei die Diffusor Anordnung (22) eine an der Diffusor-Umfangswandung (46) getragene Flammblende (56) aufweist.

9. Brennkammerbaugruppe nach einem der Ansprüche 4-8, wobei die Diffusor-Umfangswandung (46) mit dem ersten Umfangswandung-Längenbereich (48) an einem stromabwärtigen Endbereich (44) der Mischkammer-Umfangswandung (32) festgelegt ist.

10. Brennkammerbaugruppe nach einem der vorangehenden Ansprüche, wobei die Drallstrom-Erzeugungsanordnung (14) eine Mehrzahl von in Umfangsrichtung um die Brennkammerbaugruppen-Längsachse (L) aufeinanderfolgend angeordneten Strömungsablenkungselementen (28) umfasst.

11. Brennkammerbaugruppe nach Anspruch 10, wobei die Verbrennungsluft-Zuführanordnung (18) ein die Strömungsablenkelemente (28) tragendes Drallstromgehäuse (26) umfasst.

12. Brennkammerbaugruppe nach Anspruch 10, wobei das Drallstromgehäuse (26) an einem stromaufwärtigen Endbereich (30) der Mischkammer-Umfangswandung (32) festgelegt ist.

13. Brennstoffbetriebenes Fahrzeugheizgerät, umfassend eine Brennkammerbaugruppe (10) nach einem der vorangehenden Ansprüche.

14. Brennstoffbetriebenes Fahrzeugheizgerät nach Anspruch 13, wobei ein Verbrennungsluftgebläse (24) vorgesehen ist zum Zuführen von Verbrennungsluft (V) zu der Mischkammer (20) über die Drallstrom-Erzeugungsanordnung (14) und durch eine Brennstoffpumpe (58) zum Zuführen von Brennstoff (B) zu der Mischkammer (20).

## Claims

1. Combustion chamber assembly unit for a fuel-operated vehicle heater, comprising:
- a mixing chamber (20) extending in the direction of a combustion chamber assembly unit longitudinal axis (L) for generating an air/fuel mixture, wherein the mixing chamber (20) is enclosed by a mixing chamber circumferential wall (32) extending in the direction of the combustion chamber assembly unit longitudinal axis (L) and enclosing same,
- a fuel feed device (38) for feeding fuel (B) to the mixing chamber (20), wherein the fuel feed device (38) comprises an evaporator device (36), wherein the evaporator device (36) comprises a porous evaporator medium (34) overlapping the mixing chamber circumferential wall (32) on an inner side in at least some areas, which inner side faces the mixing chamber (20),
- a combustion air feed device (18) for feeding combustion air (V) to the mixing chamber (20), wherein the combustion air feed device (18) comprises a swirling flow generation device (14), wherein the swirling flow generation device (14) is arranged upstream in relation to the mixing chamber (20) with the evaporator device (36) in the direction of the combustion chamber assembly unit longitudinal axis (L),
wherein:
- the mixing chamber circumferential wall (32) is cylindrical,
- the inner side of the mixing chamber circumferential wall (32) is covered by the porous evaporator medium (34) over its entire axial extension, and
- a diffuser device (22) is arranged downstream in relation to the mixing chamber (20) in the direction of the combustion chamber assembly unit longitudinal axis (L).

2. Combustion chamber assembly unit in accordance with claim 1, wherein the porous evaporator medium (34) overlaps the mixing chamber circumferential wall (32) essentially over its entire circumference.

3. Combustion chamber assembly unit in accordance with one of the above claims, wherein the porous evaporator medium (34) has an annular or tubular configuration.

4. Combustion chamber assembly unit in accordance with one of the above claims, wherein the diffuser device (22) comprises a diffuser circumferential wall (46), wherein the diffuser circumferential wall (46) has a first circumferential wall length area (48) with smaller internal dimension, preferably internal diameter or internal cross-sectional area following the mixing chamber (20) and has a second circumferential wall length area (50), following downstream of the first circumferential wall length area (48) in the direction of the combustion chamber assembly unit (L), with in at least some areas greater internal dimension, preferably internal diameter or internal cross-sectional area increasing along the combustion chamber assembly unit longitudinal axis (L) in the direction away from the first circumferential wall length area (48).

5. Combustion chamber assembly unit in accordance with claim 4, wherein the diffuser circumferential wall (46) is configured with an essentially constant internal dimension along the combustion chamber assembly unit longitudinal axis (L) in the first circumferential wall length area (48).

6. Combustion chamber assembly unit in accordance with claim 4 or 5, wherein in the second circumferential wall length area (50) the internal dimension of the diffuser circumferential wall (46) increases degressively in the direction away from the first circumferential wall length area (48), or/and that a circumferential wall transition area (54) with progressive increase of the internal dimension, preferably internal diameter or internal cross-sectional area, of the diffuser circumferential wall (46) in at least some areas is provided between the first circumferential wall length area (48) and the second circumferential wall length area (50).

7. Combustion chamber assembly unit in accordance with one of the claims 4-6, wherein the diffuser circumferential wall (46) has a third circumferential wall length area (52) with essentially constant internal dimension, preferably internal diameter or internal cross-sectional area along the combustion chamber assembly unit longitudinal axis (L), which third circumferential wall length area follows downstream of the second circumferential wall length area (50) in the direction of the combustion chamber assembly unit longitudinal axis (L).

8. Combustion chamber assembly unit in accordance with one of the claims 4-7, wherein the diffuser device (22) has a flame diaphragm (56) carried at the diffuser circumferential wall (46).

9. Combustion chamber assembly unit in accordance with one of the claims 4-8, wherein the diffuser circumferential wall (46) is fixed with the first circumferential wall length area (48) at a downstream end area (44) of the mixing chamber circumferential wall (32).

10. Combustion chamber assembly unit in accordance with one of the above claims, wherein the swirling flow generation device (14) comprises a plurality of flow deflection elements (28) arranged following one another in the circumferential direction about the combustion chamber assembly unit longitudinal axis (L).

11. Combustion chamber assembly unit in accordance with claim 10, wherein the combustion air feed device (18) comprises a swirling flow housing (26) carrying the flow deflection elements (28).

12. Combustion chamber assembly unit in accordance with claim 10, wherein the swirling flow housing (26) is fixed at an upstream end area (30) of the mixing chamber circumferential wall (32).

13. Fuel-operated vehicle heater, comprising a combustion chamber assembly unit (10) in accordance with one of the above claims.

14. Fuel-operated vehicle heater in accordance with claim 13, wherein a combustion air blower (24) for feeding combustion air (V) to the mixing chamber (20) via the swirling flow generation device (14) and by a fuel pump (58) for feeding fuel (B) to the mixing chamber (20).

## Revendications

1. Ensemble de chambre de combustion pour un dispositif de chauffage de véhicule fonctionnant au combustible, comprenant :
- une chambre de mélange (20) s'étendant dans la direction de l'axe longitudinal d'ensemble de chambre de combustion (L) pour générer un mélange air/combustible, dans laquelle la chambre de mélange (20) est entourée par une paroi circonférentielle de la chambre de mélange (32) s'étendant dans la direction de de l'axe longitudinal d'ensemble de chambre de combustion (L) et entourant celle-ci,
- un dispositif d'alimentation en combustible (38) pour alimenter en combustible (B) la chambre de mélange (20), dans lequel le dispositif d'alimentation en combustible (38) comprends un dispositif évaporateur (36), dans lequel le dispositif évaporateur (36) comprends un milieu évaporateur poreux (34) chevauchant la paroi circonférentielle de la chambre de mélange (32) sur un côté intérieur se chevauchant dans au moins certaines zones, lequel côté intérieur fait face à la chambre de mélange (20),
- un dispositif d'alimentation en air de combustion (18) pour alimenter la chambre de mélange (20) en air de combustion (V), dans lequel le dispositif d'alimentation en air de combustion (18) comprend un dispositif de génération de flux tourbillonnaire (14), dans lequel le dispositif de génération de flux tourbillonnaire (14) est disposé en amont par rapport à la chambre de mélange (20) avec le dispositif d'évaporation (36) dans la direction de de l'axe longitudinal d'ensemble de chambre de combustion (L),
dans lequel :
- la paroi circonférentielle de la chambre de mélange (32) est cylindrique,
- la face intérieure de la paroi circonférentielle de la chambre de mélange (32) est recouverte par le milieu évaporateur poreux (34) sur toute son extension axiale, et
- un dispositif diffuseur (22) est disposé en aval par rapport à la chambre de mélange (20) dans la direction de l'axe longitudinal d'ensemble de chambre de combustion (L).

2. Ensemble de chambre de combustion selon la revendication 1, dans lequel le milieu évaporateur poreux (34) recouvre la paroi circonférentielle de la chambre de mélange (32) essentiellement sur toute sa circonférence.

3. Ensemble de chambre de combustion selon l'une des revendications précédentes, dans lequel le milieu évaporateur poreux (34) a une configuration annulaire ou tubulaire.

4. Ensemble de chambre de combustion selon l'une des revendications précédentes, dans lequel le dispositif diffuseur (22) comprend une paroi circonférentielle de diffuseur (46), dans lequel la paroi circonférentielle de diffuseur (46) présente une première zone de longueur de paroi circonférentielle (48) avec une dimension interne plus petite, de préférence un diamètre interne ou une section transversale interne, à la suite de la chambre de mélange (20), et présente une deuxième zone de longueur de paroi circonférentielle (50), suivant en aval de la première zone de longueur de paroi circonférentielle (48) dans la direction de l'axe longitudinal d'ensemble de chambre de combustion (L), avec au moins certaines zones ayant une plus grande dimension interne, de préférence un diamètre interne ou une section transversale interne, augmentant le long de de l'axe longitudinal d'ensemble de chambre de combustion (L) dans la direction s'éloignant de la première zone de longueur de paroi circonférentielle (48).

5. Ensemble de chambre de combustion selon la revendication 4, dans lequel la paroi circonférentielle de diffuseur (46) est configurée avec une dimension interne essentiellement constante le long de de l'axe longitudinal d'ensemble de chambre de combustion (L) dans la première zone de longueur de paroi circonférentielle (48).

6. Ensemble de chambre de combustion selon la revendication 4 ou 5, dans lequel, dans la deuxième zone de longueur de paroi circonférentielle (50), la dimension interne de la paroi circonférentielle de diffuseur (46) augmente de manière dégressive dans la direction s'éloignant de la première zone de longueur de paroi circonférentielle (48), et/ou dans lequel une zone de transition de paroi circonférentielle (54) avec augmentation progressive de la dimension interne, de préférence du diamètre interne ou de la section transversale interne, de la paroi circonférentielle de diffuseur (46) dans au moins certaines zones est prévue entre la première zone de longueur de paroi circonférentielle (48) et la deuxième zone de longueur de paroi circonférentielle (50).

7. Ensemble de chambre de combustion selon l'une des revendications 4 à 6, dans lequel la paroi circonférentielle de diffuseur (46) comporte une troisième zone de longueur de paroi circonférentielle (52) avec une dimension interne essentiellement constante, de préférence un diamètre interne ou une section transversale interne, dans la direction de l'axe longitudinal d'ensemble de chambre de combustion (L), laquelle troisième zone de longueur de paroi circonférentielle suit en aval la deuxième zone de longueur de paroi circonférentielle (50) dans la direction de l'axe longitudinal d'ensemble de chambre de combustion (L).

8. Ensemble de chambre de combustion selon l'une des revendications 4 à 7, dans laquelle le dispositif diffuseur (22) comporte un diaphragme de flamme (56) porté par la paroi circonférentielle de diffuseur (46).

9. Ensemble de chambre de combustion selon l'une des revendications 4 à 8, dans lequel la paroi circonférentielle de diffuseur (46) est fixée avec la première zone de longueur de paroi circonférentielle (48) à une zone d'extrémité aval (44) de la paroi circonférentielle de la chambre de mélange (32).

10. Ensemble de chambre de combustion selon l'une des revendications précédentes, dans lequel le dispositif de génération de flux tourbillonnaire (14) comprend une pluralité d'éléments de déviation de flux (28) disposés les uns à la suite des autres dans la direction circonférentielle autour de l'axe longitudinal (L) de l'ensemble de chambre de combustion.

11. Ensemble de chambre de combustion selon la revendication 10, dans lequel le dispositif d'alimentation en air de combustion (18) comprend un boîtier de flux tourbillonnaire (26) portant les éléments de déviation de flux (28).

12. Ensemble de chambre de combustion selon la revendication 10, dans lequel le boîtier de flux tourbillonnaire (26) est fixé à une zone d'extrémité amont (30) de la paroi circonférentielle de la chambre de mélange (32).

13. Dispositif de chauffage de véhicule à combustible, comprenant un ensemble de chambre de combustion (10) selon l'une des revendications précédentes.

14. Dispositif de chauffage de véhicule à combustible selon la revendication 13, dans lequel un ventilateur d'air de combustion (24) est prévu pour alimenter en air de combustion (V) la chambre de mélange (20) via le dispositif de génération de flux tourbillonnaire (14) et une pompe à combustible (58) pour alimenter en combustible (B) la chambre de mélange (20).
